# EUROPEAN PATENT APPLICATION

(11) **EP 3 163 015 A1**
(43) Date of publication of application: **03.05.2017**
(21) Application number: 16195822.8
(22) Date of filing: 26.10.2016
(51) Int. Cl.: F01D 5/00, B23P 6/00

(54) **POWER NOZZLE REPAIR WITH COOLING HARDWARE INSTALLED**

(30) Priority: 29.10.2015 US 201514926126
(71) Applicant: General Electric Company, Schenectady, NY 12345 (US)
(72) Inventor: JOHNSON, JR., Jere Allen, Greenville, SC South Carolina 29615 (US); ZHANG, Liming, Greenville, SC South Carolina 29615 (US); LUSBY, Curtis Joseph, Greenville, SC South Carolina 29615 (US)
(74) Representative: Pöpper, Evamaria

(57) **Abstract**

In one aspect, the present disclosure is directed to a method (200) for treating a region (148) of a gas turbine component (100). The method (200) includes heating the region (148) to a first temperature. One or more surface discontinuities (146) located in the region (148) are welded such that at least a portion of the region (148) is heated to a second temperature. The region (148) is annealed at a third temperature. The second temperature is relatively greater than the first temperature, and the first temperature is relatively greater than the third temperature.

## Description

### FIELD OF THE INVENTION

The present disclosure generally relates to a gas turbine and, more particularly, to a method for treating or repairing a gas turbine component.

### BACKGROUND OF THE INVENTION

A gas turbine generally includes a compressor section, a combustion section, and a turbine section. The compressor section progressively increases the pressure of a working fluid entering the gas turbine and supplies this compressed working fluid to the combustion section. The compressed working fluid and a fuel (e.g., natural gas) mix within the combustion section and burn in a combustion chamber to generate high pressure and high temperature combustion gases. The combustion gases flow from the combustion section into the turbine section where they expand to produce work. For example, expansion of the combustion gases in the turbine section may rotate a shaft connected, e.g., to a generator to produce electricity. The combustion gases then exit the gas turbine via an exhaust section.

The turbine section includes a plurality of turbine nozzles, which directs the flow of combustion gases onto the plurality of turbine rotor blades. The turbine blades, in turn, extract kinetic energy from the combustion gases. These nozzles generally operate in extremely high temperature environments. As such, the nozzles may be constructed from a nickel-based superalloy or other suitable material capable of withstanding the high temperature exhaust gases. Furthermore, the nozzles may include one or more core plugs or other cooling hardware, which are generally constructed from stainless steel or another similar material.

In some instances, the nozzles may develop cracks and/or other surface discontinuities during operation that may require periodic repair via, e.g., welding. Typically, the core plugs or other cooling hardware must be removed (e.g., by grinding off welds) prior to repair to prevent damage thereto. Moreover, the core plugs or other cooling hardware must then be reinstalled (e.g., by welding) in the nozzle after the repair. This is a time-consuming and expensive process.

### BRIEF DESCRIPTION OF THE INVENTION

Aspects and advantages of the invention are set forth below in the following description, or may be obvious from the description, or may be learned through practice of the invention.

The method for treating a region of a turbine nozzle or other gas turbine component disclosed herein the method includes heating the region at a first temperature, welding the region at a second temperature, and annealing the region at a third temperature. The third temperature (i.e., annealing temperature) is lower than the first temperature (i.e., heating temperature) and the second temperature (i.e., the welding temperature). In this respect, the method disclosed herein permits the core plugs and/or other cooling hardware to remain installed during the treatment. As such, the treatment cost and time are reduced.

In one aspect, the present disclosure is directed to a method for treating a region of a gas turbine component. The method includes heating the region to a first temperature. One or more surface discontinuities located in the region are welded such that at least a portion of the region is heated to a second temperature. The region is annealed at a third temperature. The second temperature is relatively greater than the first temperature, and the first temperature is relatively greater than the third temperature.

In a further aspect, the present disclosure is directed to a method for treating a region of a turbine nozzle. The method includes removing the turbine nozzle from a gas turbine engine. The region is heated to a first temperature. One or more surface discontinuities located in the region are welded such that at least a portion of the region is heated at a second temperature. The region is annealed at a third temperature. The second temperature is relatively greater than the first temperature, and the first temperature is relatively greater than the third temperature.

Those of ordinary skill in the art will better appreciate the features and aspects of such embodiments, and others, upon review of the specification.

### BRIEF DESCRIPTION OF THE DRAWINGS

A full and enabling disclosure of the present invention, including the best mode thereof to one skilled in the art, is set forth more particularly in the remainder of the specification, including reference to the accompanying figures, in which:
FIG. 1 is a schematic view of an exemplary gas turbine as may incorporate various embodiments disclosed herein;
FIG. 2 is a cross sectioned side view of an exemplary turbine section of a gas turbine as may incorporated in various embodiments disclosed herein;
FIG. 3 is a perspective side view of an exemplary turbine nozzle as may incorporate one or more embodiments disclosed herein;
FIG. 4 is a cross-sectional view of the exemplary turbine nozzle taken generally about line 4-4 in FIG. 3, illustrating the a plurality of core plugs positioned in an airfoil; and
FIG. 5 is a flow chart illustrating one method of treating a gas turbine component in accordance with the embodiments disclosed herein.

### DETAILED DESCRIPTION OF THE INVENTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The terms "upstream" and "downstream" refer to the relative direction with respect to fluid flow in a fluid pathway. For example, "upstream" refers to the direction from which the fluid flows, and "downstream" refers to the direction to which the fluid flows. The term "radially" refers to the relative direction that is substantially perpendicular to an axial centerline of a particular component, and the term "axially" refers to the relative direction that is substantially parallel and/or coaxially aligned to an axial centerline of a particular component.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents.

Although exemplary embodiments of the present invention will be described generally in the context of a turbine nozzle for a land based power generating gas turbine for purposes of illustration, one of ordinary skill in the art will readily appreciate that embodiments of the present invention may be applied to any style or type of gas turbine and are not limited to land based power generating gas turbines unless specifically recited in the claims.

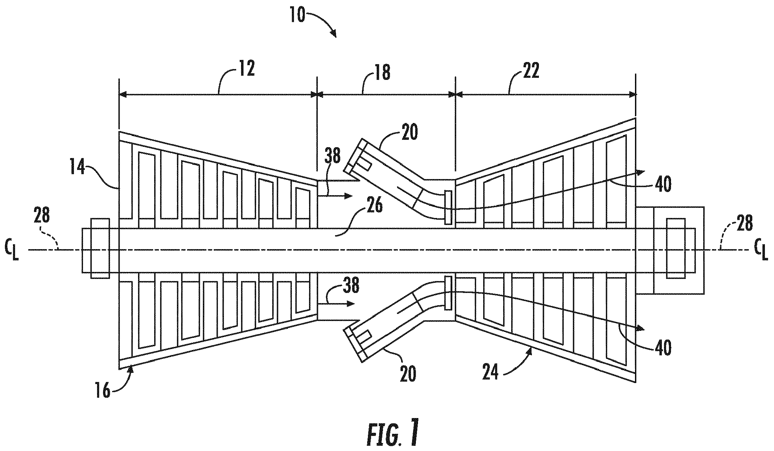

Referring now to the drawings, FIG. 1 illustrates a schematic of an exemplary gas turbine 10 as may incorporate various embodiments disclosed herein. As shown, the gas turbine 10 generally includes a compressor section 12 having an inlet 14 disposed at an upstream end of an axial compressor 16. The gas turbine 10 further includes a combustion section 18 having one or more combustors 20 positioned downstream from the compressor 16. The gas turbine 10 also includes a turbine section 22 having a turbine 24 (e.g., an expansion turbine) disposed downstream from the combustion section 18. A shaft 26 extends axially through the compressor 16 and the turbine 24 along an axial centerline 28 of the gas turbine 10.

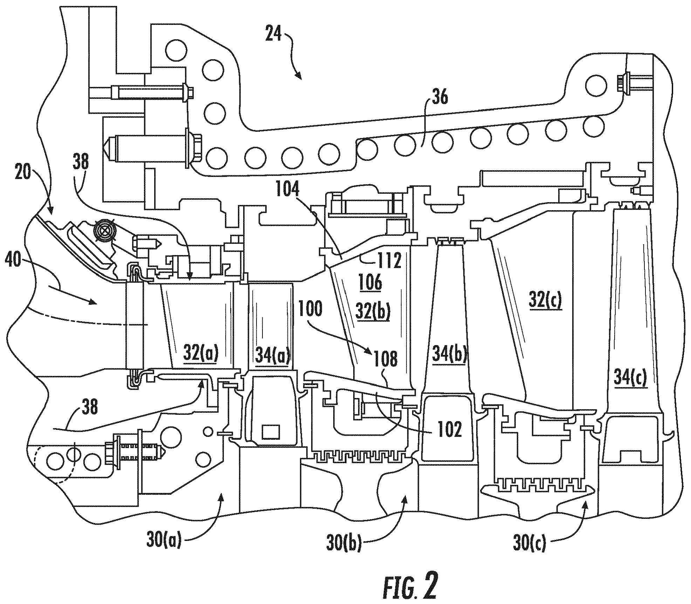

FIG. 2 provides a cross sectional side view of an exemplary turbine 24 as may incorporate various embodiments disclosed herein. As shown in FIG. 2, the turbine 24 may include multiple turbine stages 30. For example, the turbine 24 may include three turbine stages 30, including a first stage 30(a), a second stage 30(b), and a third stage 30(c). The total number of turbine stages 30 may be more or less than three, and embodiments of the present invention should not be limited to three turbine stages unless otherwise recited in the claims.

As shown in FIG. 2, each stage 30(a-c) includes, in serial flow order, a corresponding row of turbine nozzles 32(a), 32(b), and 32(c) and a corresponding row of turbine rotor blades 34(a), 34(b), and 34(c) axially spaced along the shaft 26 (FIG. 1). A casing or shell 36 circumferentially surrounds each stage 30(a-c) of the turbine nozzles 32(a-c) and the turbine rotor blades 34(a-c). The turbine nozzles 32(a-c) remain stationary relative to the turbine rotor blades 34(a-c) during operation of the gas turbine 10.

In operation, as shown in FIGS. 1 and 2, compressed air 38 from the compressor 16 is provided to the combustors 20 where it mixes with fuel (e.g., natural gas) and bums to provide a stream of hot combustion gases 40 that flows from the combustors 20 into the turbine 24. At least a portion of the compressed air 38 may be used as a cooling medium for cooling the various components of the turbine 24, such as the turbine nozzles 32(a-c) and the turbine rotor blades 32(a-c).

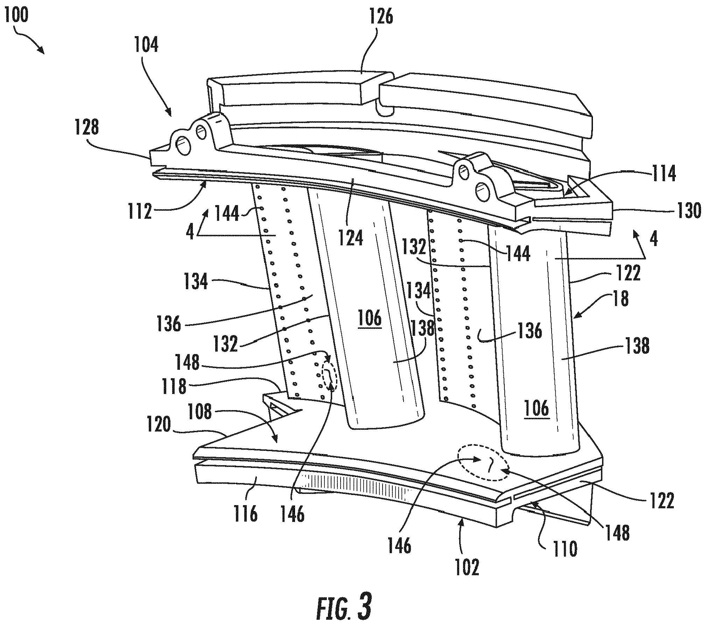

FIG. 3 provides a perspective view of an exemplary turbine nozzle 100 as may be incorporated into the turbine 24 as shown in FIG. 2 and as may incorporate various embodiments of the present disclosure. The turbine nozzle 100 may correspond with or be installed in place of any of turbine nozzles 32(a-c). In particular embodiments, the turbine nozzle 100 corresponds with the turbine nozzle 32(b) of the second stage 30(b), which may also be known in the industry as a stage two nozzle or S2N.

As shown in FIG. 3, the turbine nozzle 100 includes an inner band 102 and an outer band 104 radially spaced apart from the inner band 102. A pair of airfoils 106 extends in span from the inner band 102 to the outer band 104. In this respect, the turbine nozzle 100 illustrated in FIG. 3 is referred to in the industry as a doublet. Nevertheless, the turbine nozzle 100 may have only one airfoil 106 (i.e., a singlet), three airfoils 106 (i.e., a triplet), or a more airfoils 106. The inner band 102 includes a gas side 108 and a back side 110 oriented radially inwardly from the gas side 108. Similarly, the outer band 104 includes a gas side 112 and a back side 114 oriented radially outwardly from the gas side 112. As shown in FIGS. 2 and 3, the gas side 112 of the outer band 104 and the gas side 108 of the inner band 102 respectively define inner and outer radial flow boundaries for the stream of hot combustion gases 40 flowing at high velocity from the combustors 20 through the turbine 24.

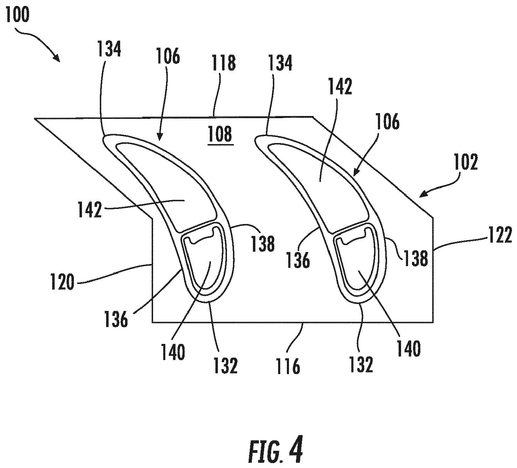

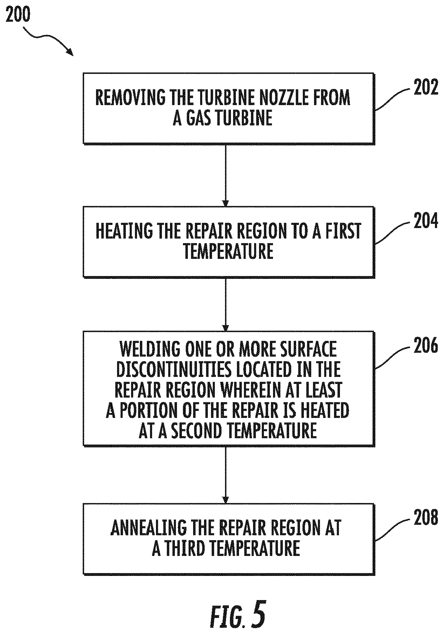

As shown in FIGS. 4 and 5, the inner band 102 includes a forward wall 116 and an aft wall 118 positioned downstream from the forward wall 116. The inner band 102 also includes circumferentially opposing side walls 120, 122. Similarly, the outer band 104 includes a forward wall 124 and an aft wall 126 positioned downstream from the forward wall 124. The outer band 104 includes circumferentially opposing side walls 128, 130. The inner and outer bands 102, 104 are preferably constructed from a nickel-based superalloy or another suitable material capable of withstanding the combustion gases 40.

FIGS. 4 and 5 illustrate the features of the airfoils 106. Each airfoil 106 includes a leading edge 132 disposed proximate to forward walls 116, 124 of the inner and outer bands 102, 104, respectfully. Each airfoil 106 also includes a trailing edge 134 disposed proximate to aft walls 118, 126 of the inner and outer bands 102, 104, respectfully. Furthermore, each airfoil 106 includes a pressure side wall 136 and an opposing suction side wall 138 extending between the leading edge 132 and the trailing edge 134. In some embodiments, the airfoils 106 may include one or more cooling apertures 144. The airfoils 106 are preferably constructed from a nickel-based superalloy or another suitable material capable of withstanding the combustion gases 40.

As illustrated in FIG. 4, each airfoil 106 may include a forward core plug 140 and an aft core plug 142. The forward and aft core plugs 140, 142 permit cooling air (e.g., compressed air 38 from the compressor section 18) to flow through the airfoils 106. In this respect, a doublet turbine nozzle, such as the turbine nozzle 100 illustrated in FIG. 4, may include two forward core plugs 140 and two aft core plugs 142 for a total of four core plugs. Although, the turbine nozzle 100 and/or the airfoils 106 therein may include more or less core plugs as is necessary or desired. Furthermore, the airfoils 106 may include other cooling hardware (not shown) as well. The forward core plugs 140, the aft core plugs 142, and any other cooling hardware may be constructed from stainless steel or another suitable material.

FIG. 5 illustrates one embodiment of a method (200) for treating a region 148 (FIG. 3) of a gas turbine component in accordance with the embodiments disclosed herein. The treatment in accordance with method (200) may include repair and/or upgrade. In this respect, the region 148 may be a repair region and/or an upgrade region. The method (200) is described in the context of repairing one or more cracks and/or surface discontinuities 146 (FIG. 3) in a stage two turbine nozzle or S2N. As such, the turbine nozzle 100 is removed from the gas turbine 10 in step (202). Nevertheless, the method (200) may be used on any turbine nozzle (e.g., stage one or S1N, stage three or S3N, etc.) or any other component of the gas turbine 10 capable of being repaired via welding. As such, embodiments of the method (200) should not be limited to particular components of the gas turbine 10 unless otherwise recited in the claims.

In step (204), the region 148 is heated to a first temperature. In some embodiments, the first temperature may be between 1500 degrees Fahrenheit and 2300 degrees Fahrenheit. In other embodiments, the first temperature may be between 2000 degrees Fahrenheit and 2200 degrees Fahrenheit. The region 148 may be heated in accordance with step (204) for less than one hour, at least one hour, at least two hours, at least three hours, or longer.

The region 148 may be any region of the turbine nozzle 100 or other gas turbine component having one or more cracks and/or surface discontinuities 146 therein repaired with the method (200). In the context of a turbine nozzle 100 one or more cracks and/or surface discontinuities 146 may be positioned on the inner band 102, the other band 104, and/or the airfoil 106. For example, FIG. 3 illustrates a crack/discontinuity 146 on the inner band 102 and another crack/discontinuity 146 on the airfoil 106. In this respect, the region 148 may be a portion of the inner band 102, the other band 104, and/or the airfoil 106 as illustrated in FIG. 3. Alternately, the region 148 may be the entire inner band 102, the entire outer band 104, the entire airfoil 106, or the entire turbine nozzle 100. As such, a portion of the turbine nozzle 100 or the entire turbine nozzle 100 may be heated at the first temperature in accordance with step (204).

In step (206), the one or more surface discontinuities 146 in the region 148 are welded. Any suitable type of welding may be used (e.g., gas tungsten arc welding, electron beam welding, laser welding, etc.). In this respect, at least a portion of the region 148 is heated at a second temperature, which is relatively higher than the first temperature. In alternate embodiments, the one or more surface discontinuities 146 may be brazed.

The region 148 is annealed at a third temperature in step (208). The first temperature and the second temperature are relatively higher than the third temperature. In some embodiments, the third temperature may be between 1500 degrees Fahrenheit and 2100 degrees Fahrenheit. In other embodiments, the third temperature may be between 1800 degrees Fahrenheit and 2000 degrees Fahrenheit. In this respect, the first temperature may be at least one hundred degrees Fahrenheit greater than the third temperature in some embodiments. In other embodiments, the first temperature may be at least one hundred and fifty degrees Fahrenheit greater than the third temperature. The region 148 may be annealed in accordance with step (208) for less than one hour, at least one hour, at least two hours, at least three hours, or longer. In this respect, the region 148 may be annealed in accordance with step (208) for longer, shorter, or the same amount of time as the region 148 is heated in accordance with step (204).

Because the third temperature is relatively lower than the first and second temperatures, at least one of the forward core plugs 140 or aft core plugs 142 may remain installed in the airfoils 106 during the steps (204), (206), and (208). Preferably, however, every one of the forward core plugs 140 or aft core plugs 142 remains installed in the airfoils 106 during the steps (204), (206), and (208). In the case of the turbine nozzle 100 disclosed in FIGS. 3 and 4, both forward core plugs 140 and both aft core plugs 142 preferably remain installed in the airfoils 106 during the steps (204), (206), and (208). This reduces the treatment (e.g., repair or upgrade) time and cost.

The method (200) may include other steps as well. For example, the method (200) may include reinstalling the turbine nozzle 100 in the gas turbine 10. Furthermore, the method (200) may include various inspection steps.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other and examples are intended to be within the scope of the claims if they include structural elements that do not differ from the literal language of the claims, or if they include equivalent structural elements with insubstantial differences from the literal language of the claims.

Various aspects and embodiments of the present invention are defined by the following clauses:
1. A method for treating a region of a gas turbine component, the method comprising:
   heating the region at a first temperature;
   welding one or more surface discontinuities located in the region, wherein at least a portion of the region is heated at a second temperature;
   annealing the region at a third temperature;
   wherein the second temperature is greater than the first temperature, and the first temperature is greater than the third temperature.
2. The method of clause 1, wherein the gas turbine component is a turbine nozzle.
3. The method of clause 2, wherein the turbine nozzle is formed of a nickel-based superalloy.
4. The method of clause 2, wherein the region is on an airfoil of the turbine nozzle.
5. The method of clause 2, wherein the region is on an inner band or an outer band of the turbine nozzle.
6. The method of clause 2, wherein at least one core plug remains installed in the airfoil during heating, welding, and annealing steps.
7. The method of clause 1, wherein the heating step and the annealing step comprise the same duration.
8. The method of clause 1, wherein the annealing step comprises a longer duration than the heating step.
9. The method of clause 1, wherein the first temperature is at least one hundred degrees Fahrenheit higher than the third temperature.
10. The method of clause 1, wherein the first temperature is at least one hundred and fifty degrees Fahrenheit higher than the third temperature.
11. A method for treating a region of a turbine nozzle, the method comprising:
   removing the turbine nozzle from a gas turbine engine;
   heating the region at a first temperature;
   welding one or more surface discontinuities located in the region, wherein at least a portion of the region is heated at a second temperature;
   annealing the region at a third temperature;
   wherein the second temperature is greater than the first temperature, and the first temperature is greater than the third temperature.
12. The method of clause 11, wherein the turbine nozzle is formed of a nickel-based superalloy.
13. The method of clause 11, wherein the region is on an airfoil of the turbine nozzle.
14. The method of clause 11, wherein the region is on an inner band or an outer band of the turbine nozzle.
15. The method of clause 11, wherein at least one core plug remains installed in the airfoil during the heating, welding, and annealing steps.
16. The method of clause 11, wherein the heating step and the annealing step comprise the same duration.
17. The method of clause 11, wherein the annealing step comprises a longer duration than the heating step.
18. The method of clause 11, wherein the first temperature is at least one hundred degrees Fahrenheit greater than the third temperature.
19. The method of clause 11, wherein the first temperature is at least one hundred and fifty degrees Fahrenheit greater than the third temperature.
20. The method of clause 11, wherein the turbine nozzle comprises four core plugs and all four core plugs remain in the turbine nozzle during the heating, welding, and annealing steps.

## Claims

1. A method (200) for treating a region (148) of a gas turbine component (100), the method (200) comprising:
heating the region (148) at a first temperature (204);
welding one or more surface discontinuities (146) located in the region (148), wherein at least a portion of the region (148) is heated at a second temperature (206);
annealing the region (148) at a third temperature (208);
wherein the second temperature is greater than the first temperature, and the first temperature is greater than the third temperature.

2. The method (200) of claim 1, wherein the gas turbine component (100) is a turbine nozzle (100).

3. The method (200) of claim 2, wherein the turbine nozzle (100) is formed of a nickel-based superalloy.

4. The method (200) of claims 1 and 2, wherein the region (148) is on an airfoil (106) of the turbine nozzle (100).

5. The method (200) of claims 1 and 2, wherein the region (148) is on an inner band (102) or an outer band (104) of the turbine nozzle (100).

6. The method (200) of claim 4, wherein at least one core plug (140, 142) remains installed in the airfoil (106) during heating (204), welding (206), and annealing (208) steps.

7. The method (200) of claim 1, wherein the heating step (204) and the annealing step (208) comprise the same duration.

8. The method (200) of claim 1, wherein the annealing step (208) comprises a longer duration than the heating step (204).

9. The method (200) of claim 1, wherein the first temperature is at least one hundred degrees Fahrenheit higher than the third temperature.

10. The method (200) of claim 1, wherein the first temperature is at least one hundred and fifty degrees Fahrenheit higher than the third temperature.

11. A method (200) for treating a region (148) of a turbine nozzle (100), the method (200) comprising:
removing the turbine nozzle (100) from a gas turbine engine (10) (202);
heating the region (148) at a first temperature (204);
welding one or more surface discontinuities (146) located in the region (148), wherein at least a portion of the region (148) is heated at a second temperature (206);
annealing the region (148) at a third temperature (208);
wherein the second temperature is greater than the first temperature, and the first temperature is greater than the third temperature.

12. The method (200) of claim 11, wherein the region (148) is on an airfoil (106) of the turbine nozzle (100) and at least one core plug (140, 142) remains installed in the airfoil (106) during the heating (204), welding (206), and annealing (208) steps.

13. The method (200) of claim 11, wherein the first temperature is at least one hundred degrees Fahrenheit greater than the third temperature.

14. The method (200) of claim 11, wherein the first temperature is at least one hundred and fifty degrees Fahrenheit greater than the third temperature.

15. The method (200) of claim 11, wherein the turbine nozzle (100) comprises four core plugs (140, 142) and all four core plugs (140, 142) remain in the turbine nozzle (100) during the heating (204), welding (206), and annealing (208) steps.
